(19) **Europäisches Patentamt**
**European Patent Office**
**Office européen des brevets**

(11) **EP 1 672 460 B1**

(12) **EUROPEAN PATENT SPECIFICATION**

(45) Date of publication and mention
of the grant of the patent:
**25.11.2009 Bulletin 2009/48**

(51) Int Cl.:
**G06F 21/20** (2006.01)

(21) Application number: **04257808.8**

(22) Date of filing: **15.12.2004**

(54) **Computer user detection apparatus**

Vorrichtung zur Detektion von Computerbenutzern

Dispositif de détection d'utilisateur d'ordinateur

(84) Designated Contracting States:
**DE FR GB IT**

(43) Date of publication of application:
**21.06.2006 Bulletin 2006/25**

(73) Proprietor: **STMicroelectronics (Research & Development) Limited**
**Marlow, Buckinghamshire SL7 1YL (GB)**

(72) Inventors:
• **Raynor, Jeffrey**
**Edinburgh EH12 5HZ (GB)**

• **Stewart, Brian Douglas**
**Edinburgh EH7 4HE (GB)**

(74) Representative: **Cooper, John et al**
**Murgitroyd & Company**
**165-169 Scotland Street**
**Glasgow G5 8PL (GB)**

(56) References cited:
**US-A- 5 635 905**      **US-A- 5 835 083**
**US-A- 5 991 429**      **US-A- 6 111 517**
**US-A1- 2002 095 222**   **US-B1- 6 421 453**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a computer user detection apparatus and a method for detecting the new presence or absence of a computer user.

To save on power consumption, computers operate "screen saver" programs whereby the computer's display can be shut down or operated in another low power mode when a computer user stops using the computer. A screen saver program is usually set to power down the display after a predetermined period of inactivity, which it uses as a measure of when a user is absent. A user's presence is then detected by the resumed operation of the computer, for example by detecting the pressing of a key or the movement of a mouse.

It is particularly important to reduce the power consumed by the screen of a laptop or other wireless computing device, as the screen accounts for a large amount of the device's overall power consumption.

For example, a laptop's screen may account for approximately half of its overall power consumption.

Some screen savers have a facility whereby once the screen saver is deactivated, the user is required to re-enter their username and/or password in order to regain access to the computer's functions. This helps increase the security of information and to control access to the computer's functions.

However, the predetermined time that must elapse before a screen saver becomes operative means that a certain amount of power is always wasted while the computer is waiting for the time to elapse. If a user leaves the screen momentarily, this time also represents a window for unauthorised access to the computer. The predetermined time cannot be made very short, as this would result in the computer's screen being shut down each time the user pauses during his operation of the computer.

It is therefore desirable to have another form of user detection that is automatic and that acts to save power and optionally to help safeguard the computer's security.

US 2002/095222 A1 discloses apparatuses and methods providing improved control over the activation and deactivation of a computer program by detecting the physical presence of a user via a proximity sensor.

US-A-5 635 905 discloses a system for detecting the presence of a human observer, in particular human eyes, in an area by using a pair of cameras.

US-B1-6 421 453 discloses a method for controlling access of an individual to one computer by using sensors.

US-A-6 111 517 discloses a monitoring system for regulating access to a computer system by using a face recognition process.

US-A-5 835 083 discloses an eyetracker to control access to a computer. A motion detector is also used.

US-A-5 991 429 discloses a method for identifying individuals for the purposes of determining clearance access wherein a facial recognition process is used.

According to a first aspect of the present invention, there is provided a computer user detection apparatus comprising one or more linear arrays of light sensing elements; circuit means arranged to obtain an output representative of light incident on the or each linear array; and signal processing means arranged to ascertain a new presence or absence of a computer user based on the output from the or each linear array.

Preferably, the computer user detection apparatus further comprises an output interface operable to send command signals to a computer to selectively adjust the mode of operation of the computer's screen and/or to log out a user from the computer based on the assertion of a new absence or presence of a user.

Preferably, the computer user detection apparatus comprises two linear arrays of light sensing elements or two pairs of linear arrays of light sensing elements arranged at opposing portions of a substrate on which the apparatus is embodied.

Preferably, the or each linear array of light sensing elements is a subset of a two dimensional array of light sensing elements.

Preferably, the two dimensional array of light sensing elements has a width of less than one hundred and twenty light sensing elements and a length of less than one hundred and sixty light sensing elements.

Preferably, the signal processing means is hard or soft coded with a detection algorithm for ascertaining a new presence or absence of a computer user based on the output from the or each linear array.

Preferably, the detection algorithm comprises one or more sub-algorithms selected from the group comprising a motion detection algorithm, a focus detection algorithm, and a colour detection algorithm.

Preferably, the mode of operation of the computer's screen is adjustable to a first mode when a user is detected and a second mode when a user is not detected, the power consumption of the display being less in the second mode than in the first mode.

Preferably, the output interface sends a command signal to the computer via any one of the following communication interfaces: USB, I$^2$C, SPI, interrupt output, any suitable wireless interface.

According to a second aspect of the present invention, there is provided a method of detecting the presence or absence of a computer user comprising the steps of providing one or more linear arrays of light sensing elements; obtaining an output representative of light incident on the or each linear array; and processing the output to ascertain a new presence or new absence of a computer user based on the output from the or each linear array.

Preferably, the method further comprises the steps of providing an output interface; and sending command signals from the output interface to a computer to selectively adjust the mode of operation of the computer's screen and/or to log out a user from the computer based on the assertion of a new absence or presence of a user.

Preferably, the step of processing the output to ascertain a new presence or new absence of a computer user based on the output from the or each linear array comprises performing a detection algorithm, said algorithm comprising one or more sub-algorithms selected from the group comprising a motion detection algorithm, a focus detection algorithm, and a colour detection algorithm.

Preferably, the motion detection algorithm comprises the steps of determining frame by frame changes in intensity of outputs from the or each linear array of light sensing elements, comparing said changes with a predetermined threshold, and, if said changes exceed the predetermined threshold, asserting the new presence or new absence of a computer user.

Preferably, prior to the step of asserting the new presence or new absence of a computer user, the steps of measuring a reference intensity and performing a frame by frame normalisation based on the reference intensity are performed.

Preferably, the focus detection algorithm is used to detect a new presence or absence of a computer user at a predetermined distance from a computer display.

Preferably, the focus detection algorithm comprises a training component that learns the typical distance of the computer user from the computer display.

Preferably, the colour detection algorithm comprises a colour balancing component to compensate for variations in scene illumination.

Preferably, the colour detection algorithm comprises a training component that learns the typical skin tone of the computer user.

Preferably, the colour detection algorithm and the focus detection algorithm operate to verify the presence of a computer user having predetermined skin tone properties, and being at a predetermined distance from a computer display.

Preferably, a motion detection algorithm also operates, and all three motion, focus and colour detection algorithms are operated before asserting the new presence or absence of a computer user.

Preferably, the predetermined motion threshold and/or one or more of a predetermined focus threshold and a predetermined colour threshold used for detection of a new presence of a computer user is different from the predetermined threshold used for detection of a new absence of a computer user.

Preferably, the method further comprises the steps of using a first algorithm for detection of a new computer user presence or a new computer user absence, and, when the first algorithm indicates a new presence or absence, using one or more further algorithms to verify the new presence or absence.

Preferably, the or each linear array of light sensitive elements are subsets of a two dimensional array of light sensitive elements.

Preferably, the motion detection algorithm ignores motion in a specified region of space.

Preferably, the method further comprises the step of operating two dimensional array to recognise the presence of a human face.

Preferably, the step of recognising the presence of a human face comprises one or more of verifying the presence of eyes, checking for a round head in focus, and checking the height of a head.

Preferably, the step of obtaining an output from the or each linear array is carried out at a frame rate equal to or less than five frames per second.

According to a third aspect of the present invention, there is provided a computer comprising the computer user detection apparatus of the first aspect. Said computer can be programmed to carry out the method of the second aspect.

The present invention will now be described, by way of example only, with reference to the accompanying drawings, in which:

Fig. 1 shows an image sensor in accordance with a first embodiment of the invention;

Fig. 2 shows an image sensor in accordance with a second embodiment of the invention;

Fig. 3 shows an image sensor in accordance with a third embodiment of the invention;

Fig. 4 illustrates how the image sensor of Fig. 3 could be used;

Fig. 5 shows an image sensor in accordance with a fourth embodiment of the invention; and

Fig. 6 shows an image sensor in accordance with a fifth embodiment of the invention.

The invention provides a computer user detection apparatus that checks for the presence of a real computer user in a specific location, that is, in front of a computer screen.

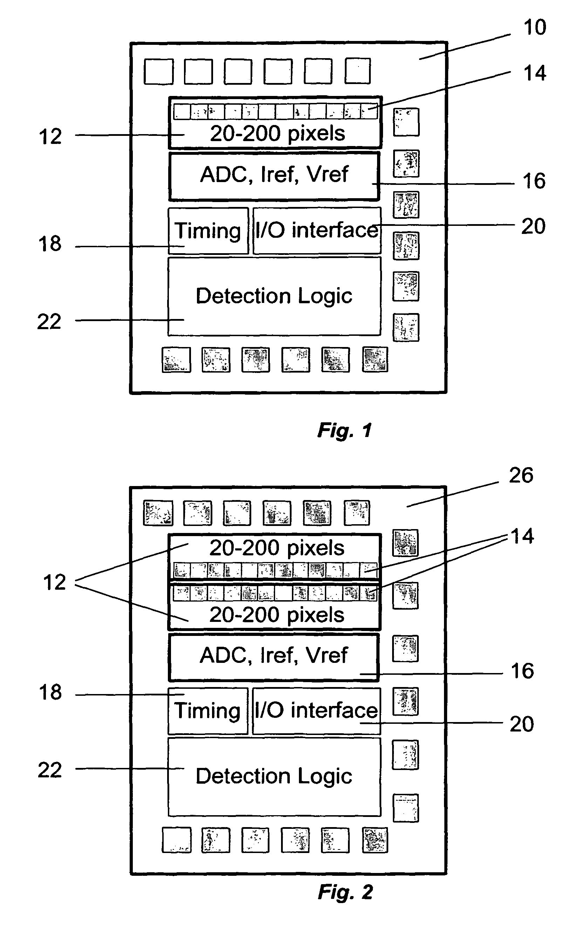

Fig. 1 illustrates a detector device 10 used in a first embodiment of a computer user detection apparatus. The detector device 10 comprises a linear, i.e. a one-dimensional, array 12 of light sensing elements 14, which in this embodiment are pixels. Circuit means including an analogue to digital conversion means 16 and timing circuit 18 are provided to obtain an output of light incident on the linear array. The detector device 10 may also be provide with an output interface 20. The output from the linear array is interpreted by processing means comprising a detection logic processor 22, the operation of which will be described in more detail below.

The array 12, together with the circuit means 16, 18 and the optional output interface 20 together can be considered as a sensor. A linear array 12 is used to reduce the complexity of the data processing, so that the sensor 12 and processor 22 can be made very small. With such a compact system, it may be practical to combine the sensor 12 and processing logic 22 onto a single device 10. This also helps reduce the cost of the detection apparatus which makes use of the detector device 10.

The array 12 of the detector device 10 shown in Fig. 1 may have between 20 and 200 pixels, depending on how the detection logic 22 is arranged to operate. It will be appreciated that the size of the array could be adjusted outside the above range if required for any specific application of the detector apparatus.

In various alternative embodiments, the light sensing elements 14 may be standard linear type pixels (3 transistor, 4 transistor), logarithmic type pixels, or extended dynamic range light-frequency conversion type pixels, and can be monochrome or coloured.

Fig. 2 illustrates a detector device 26 used in a second embodiment of a detection apparatus. Components thereof that are similar to those shown in Fig. 1 are illustrated with like reference numerals. The detector device 26 of Fig. 2 is similar to the detector device 10 shown in Fig. 1, except that there are two linear arrays 12. This increases the area and complexity of the detector device 26 as compared to that illustrated in Fig. 1, but only to a small degree.

Having two linear arrays 12 rather than one also permits the use of readout columns which are not multiplexed. This is of particular advantage when the light sensing elements 14 comprise extended dynamic range light to frequency conversion pixels, as these cannot be simply multiplexed.

In a conventional image sensor, pixels are arranged next to each other in a grid to ensure that an entire scene is captured and can be reproduced in an image, i.e. a pictorial representation of an entire scene. However, the addition of a second linear array 12 of light sensing elements 14 does not serve the purpose of sampling an entire image, but rather serves the purpose of increasing the volume of space that the sensor observes. Having two (or more) lines of pixels allows the system to observe two (or more) "slices" of space, which is advantageous for a number of applications. For example, such a system would be able to detect the head of either a taller person or of a shorter person without the need to adjust the sensor. Thus, the reliability of the system is improved.

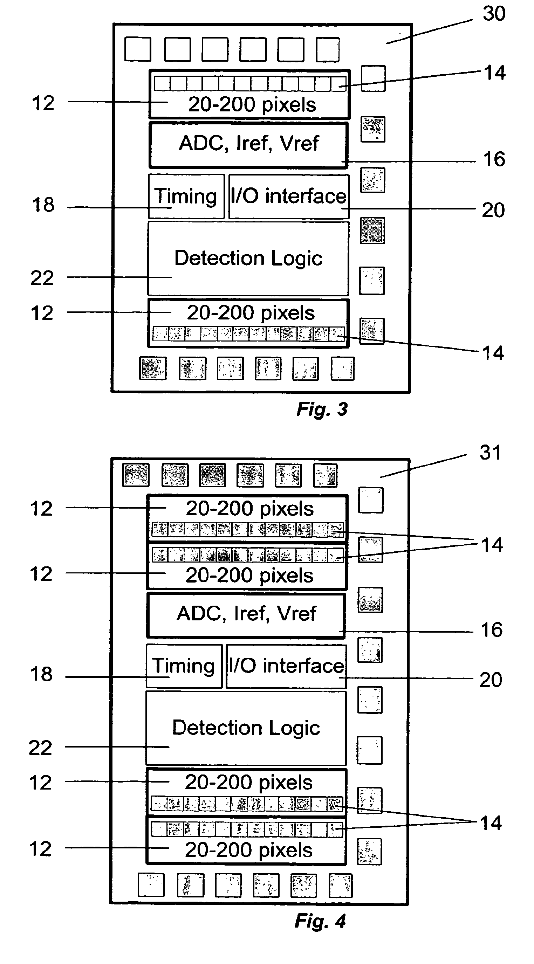

Fig. 3 illustrates a detector device 30 used in a third embodiment of a detection apparatus. Components thereof that are similar to those shown in Figs. 1 and 2 are illustrated with like reference numerals.

In Fig. 3, the displacement between the two arrays 12 of light sensing elements 14 is increased with respect to their displacement as shown in Fig. 2, such that they are arranged at opposing portions of a substrate on which the detector device 10 (and thus the detection apparatus) is embodied. It is described above how having two (or more) lines of light sensing elements allows the system to observe two (or more) "slices" of space, which provides a more reliable system. The arrangement of Fig. 3 increases this reliability by producing the greatest possible distance between the observed regions (for a given lens) without having to include an image sensor of the size to fill the region between the two arrays 12 of light sensing elements 14.

It is to be understood that by arranging the arrays 12 at opposing portions, we mean that they are merely spaced apart enough to give advantageous effects in regard to increasing reliability by imaging different "slices" of space. That is, they do not have to be spaced apart as far as is physically possible. For example, each array 12 could be positioned between the detection logic 22 and the I/O interface 20.

Similarly, it is possible to have several linear arrays 12 of light sensing elements 14 on the device, where each linear array 12 is arranged to observe a single slice of space, and focus detection outputs of the lines could be combined for a more reliable system.

For example, Fig. 4 illustrates a detector device 31 according to a fourth embodiment of a detection apparatus. Components thereof that are similar to those shown in figs. 1-3 are illustrated with like reference numerals.

In the detector device 31 of Fig. 4, two sets of linear arrays 12 are provided at opposing portions of a substrate on which the detector device 31 (and thus detection apparatus) is embodied. Having two lines in each set enables colour space measurements using a Bayer pattern array of colour sensitive pixels, and also enables an increased accuracy for a focus detection scheme, as each set of arrays comprises two linear arrays that are close together to provide better edge detection. Again, the illustrated arrays do not and cannot serve the purpose of sampling an entire image

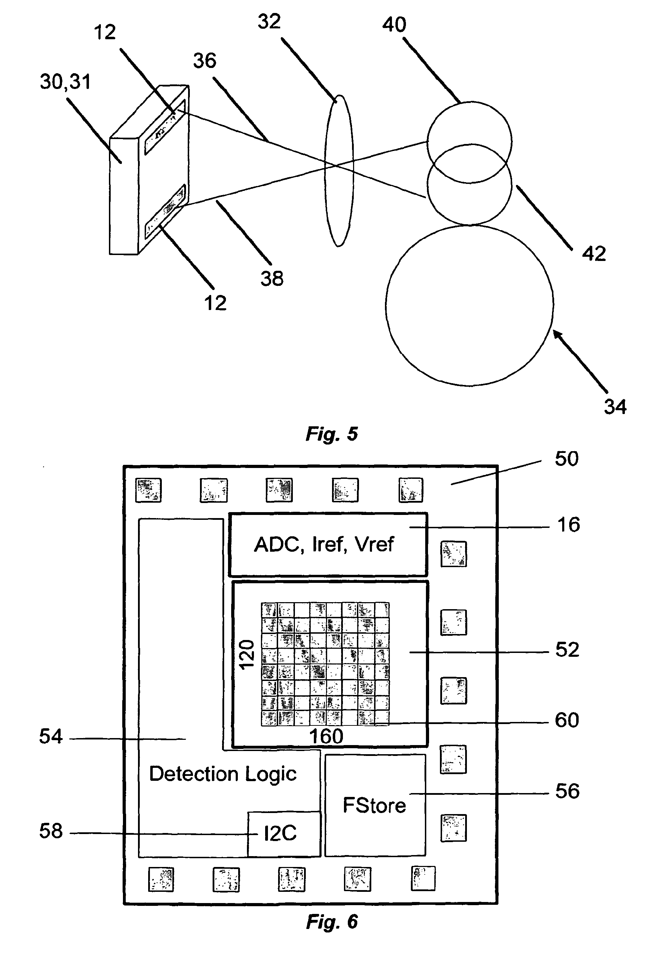

Fig. 5 shows how a detector device of Fig. 3 or Fig. 4 operates. The detector device 30, 31 is arranged to operate with a detection apparatus comprising an optical element 32 (shown here as a lens) to detect the presence of a user 34. The chief optical rays of the system are shown at 36 and 38. Hence, it can be seen that a user's head can be detected at a high position 40 or a low position 42. The displacement between the two sets of light sensing elements 14 means that a larger volume of space is monitored, so that the detection apparatus is more reliable to detect users 34 of differing heights, or to cope with changes in the posture of a user 34.

A fifth embodiment of a detector device is illustrated in Fig. 6. A detector device 50 comprises an image sensor 52, which includes an analogue to digital conversion means (not shown), a detection logic processor 54, a memory means 56, which in a preferred embodiment is a frame store, and an output interface 58, which in this preferred embodiment is an I2C output interface.

The memory means 56 is required for example if a motion detection algorithm is employed to detect temporal changes in the image.

The image sensor 52 comprises a two dimensional pixel array 60. In a first mode of operation, the full array is used to perform the functions of a digital camera, functioning for example as a web cam or for sending video clips over the internet. The illustrated array 60 comprises 120x160 pixels. This size corresponds to the QVGA format. A higher resolution could be used, but would come at the expense of increasing the size of frame store 56. Another advantage of having fewer pixels 60 is that the pixels 60 can be made larger at lower cost. Large pixels 60 collect more light and hence are more sensitive than smaller ones. This allows the camera to be used in a low-light office environment and lower noise images to be produced from the sensor. The lower noise component of the resultant image helps to minimize false errors produced by the detection logic 54.

Using a two dimensional system enables more detection algorithms to be implemented and thereby a lower false-detection rate, and also enables the camera to be used for a wide range of applications (web conferencing, video Emails etc). The optics for a two dimensional sensor needs to be of better quality than a one dimensional (linear) sensor, especially if the unit is to be used for "visual" (e.g. web cam and/or photographic) purposes.

In a second mode of operation, the detector device 50 is switched to a user detection mode wherein a subset of the pixel array 60 is activated. This mode of operation thus consumes less power than the mode where the full array 60 is used. The subset can include one or more linear arrays, which can be arranged as desired, for example to mirror the functionality provided by the embodiments illustrated in Figs. 1-4. Furthermore, three side-by-side linear arrays can be used to give greater reliability, for example by differentiating a horizontal edge from a vertical edge.

In a further embodiment, the array 60 is very small and is used only for detection rather than being suitable for video or photographic purposes. For example, the array 60 could comprise 20 pixels by 20 pixels. The abovementioned QVGA format is the smallest recognised format for web-cameras, video emails, and the like, and an image sensor for dedicated use as a detection device can have a pixel array 60 that is smaller than 120 X 160 pixels, which size would be unsuitable for use as an image sensor, digital camera or web cam. An example array size that would give good functionality for a detection device but that would be unsuitable for other more general imaging purposes would be an array of twenty by twenty pixels.

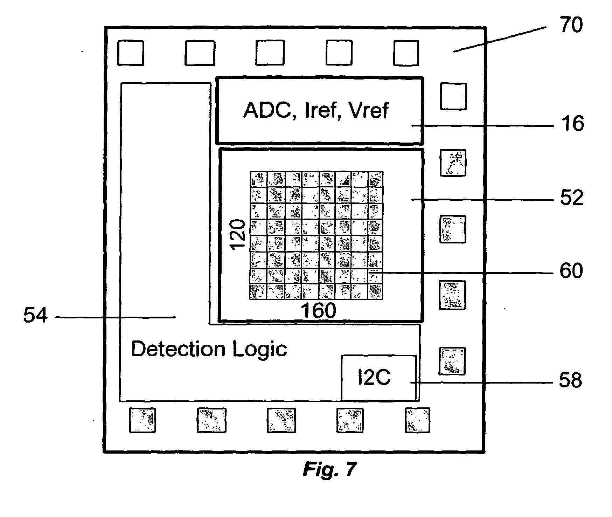

The device shown in Fig. 6 shows a "system on a chip". Various system partitions can be implemented, for example, one chip comprising a sensor and ADC and another comprising detection logic and a frame store. A detector device 70 with no frame store is shown in Fig. 7.

In all the above embodiments, the sensor used in a detection system does not normally output motion pictures for a human observer. It is therefore possible and also advantageous to reduce the sensor's (and thus the system's) frame rate. The lower processing rate results in lower power consumption for the device, and the longer time between frames means that there are more photons to collect between frames, resulting in a more light sensitive system. For example, a typical web cam may have a frame rate of between fifteen and twenty-five frames per second, and so a user detection system could have a frame rate of below twenty-five frames per second. A system could operate practically at a rate of 0.1 to five frames per second.

It is also possible to have a variable frame rate. For example, when used with a computer, a "high" rate of five frames per second could be adopted when a computer user is present, and thereafter a "low" frame rate, for example 0.1 frames per second, could be adopted when checking for the presence of a user.

Furthermore, a two dimensional array can be operated in a first mode for where the full image sensing array is enabled such that the image sensor can function as a digital camera or web cam. However, in a standby mode, only one or a few columns of the image sensing array are active in order to function as a detector device. This means that the power consumed by the array is greatly reduced. For example, a VGA sensor comprises a 640x480 pixel array. If only two columns were enabled in a standby mode, in principle the power consumption in standby mode is only (2/640) = 0.3% of the power consumption of the array in imaging mode. In practice, this power saving is slightly reduced by the effect of stray capacitance on the row-select lines, support circuitry (e.g. reference circuits such as bandgaps) and also the digital processing.

The detector devices described above can in particular be used as a part of a user detection apparatus for a computer. A connection can be made between the detector and a host PC in a number of ways, for example by USB, $I^2C$ or SPI, Interrupt Output, or even a wireless interface.

USB is a very common interface, allowing a single bus to be shared between several peripherals. Using this interface would incur minimal cost penalties for the computer manufacturer. The disadvantage is that it is rather complex to implement - both on the sensor (where a cost penalty is incurred because of the increased size) and on the host PC (where a cost penalty is incurred because of the increased processing power required. This type of interface has the bandwidth (USB1 = 12Mbps) to allow either the image to be streamed to the PC for the PC process, or lower speed and just the status information to be passed (e.g. user present, user not present).

$I^2C$ or SPI is a popular way of connecting low-speed devices. Its low speed (100kbps / 400kbps) prevents images being streamed but has lower requirements for both the sensor and host.

When using Interrupt Output, the device would use a dedicated digital line to indicate something had happened (e.g. user no longer present or user returned). This pin could be used alongside either USB or $I^2C$/SPI interface. An advantage of this pin is that although it requires dedicated hardware on the host PC, it does not require activity from the host PC to monitor it. If the host PC is operational, no CPU activity is required to monitor the line - only to do something when something happens. If the host PC is not operational (e.g. in suspend, hibernate, sleep or other low power mode), it is possible for the sensor's interrupt signal to wake up the PC.

Wireless network adapters, for example, IEEE 802.11a/b/g/i, Bluetooth, WiMax or Zigbee, are becoming more popular on PCs, and so there is no cost penalty or re-design required to use one for the present purposes. If a PC has this interface, it is easy for the user to add such a device after purchase of the PC as no electrical connection need to be made.

The above detection apparatuses can use one or a number of different detection algorithms to function. These algorithms can be hard coded on the detection logic processors mentioned above, or can be implemented as a software code operable to configure a RAM component of a detection logic to control is operation.

The computer user detection device operates firstly while a user is present to verify that the user is present and power down the display if the user leaves the computer, and secondly to then check for the presence of a user and power up the display if a user is detected.

The first type of algorithm is a motion detection algorithm. Motion detection algorithms are known for use in image sensors such as digital cameras or web cams, where a normal two dimensional array is used. However, algorithms suitable for use with a two dimensional array can be adapted for use with a linear array. An example algorithm may comprise the following steps:

- Acquire a line of data L1 ($[0:N_{pix}]$ - set of i pixel values, numbered from 0 to Npix
- Wait for a predetermined period of time (integration time)
- Acquire another line of data L2 ($[0:N_{pix}]$)
- Compute the difference between the frames:
  For i = 0 to $N_{pix}$

$$\texttt{Diff[i] = ABS(L1[i] - L2 [i]) (ABS =}$$
$$\texttt{"absolute difference")}$$

- Calculate the sum of the differences (Sum of Absolute Differences):

$$\texttt{SAD}_{\texttt{reference}} \texttt{ = 0 : For i = 0 to N}_{\texttt{pix}}$$

$$\texttt{SAD = SAD}_{\texttt{reference}} \texttt{ + Diff[i]}$$

Typically, a user is constantly moving (albeit by a small amount) in front of the machine, so there would always be some motion detected. Therefore, a predetermined threshold can be defined, and if the sum of absolute differences "SAD" is greater than the threshold, then it is determined that there has been a change in the scene, and the computer can then wake up the display.

One problem with a simple motion detection system is that it is "fooled" by a change in the system's exposure mechanism. One solution for this would be for the timing control system 18 (illustrated in figs. 1, 2,3, 4 and part of the image sensor 52 of figs. 6 and 7) to output the settings at which it is operating to the detection logic 22, 54. These factors can then be included in the motion detection algorithm to make it independent of actual scene intensity.

For example, if a first frame has an exposure time of $T_{int1}$ and gain of G1 and a second frame has an exposure time of $T_{int2}$ and gain of G2, an example motion detection algorithm could function as follows:

- Acquire line of data $L1[0:N_{pix}]$

$$\text{Normalize the data } LN1[0:N_{pix}] = L1[0:N_{pix}] \;/\; (T_{int1} \times G1)$$

- Wait a period of time
- Acquire another line of data $L2[0:N_{pix}]$

$$\text{Normalize the data } LN2[0:N_{pix}] = L2[0:N_{pix}] \;/\; (T_{int2} \times G2)$$

- Compute the difference between the frames:
  For i = 0 to $N_{pix}$

$$\texttt{Diff[i] = ABS(LN1[i] - LN2 [i])}$$

- Calculate the sum of the differences:

$$\texttt{SAD = 0 : For i = 0 to Npix}$$

$$\texttt{SAD = SAD + Diff[i]}$$

Again, if the sum of absolute differences "SAD" is greater than a pre-determined threshold, then there has been some change in the scene and the PC should wake up the display.

Any of the pixel arrays of the above detector devices can be used to provide the outputs for a motion detection algorithm.

A further type of algorithm that can be used is a focus detection algorithm, as seen for example in patents US 5151583, US 5404163, or US 6753919. It is possible to envisage a situation where a user was concentrating on the screen and hence there would be no motion. If the display was turned off at this point, it would break the user's concentration and be rather annoying, hence a more practical, but more computationally expensive algorithm would be to detect the focus of an object in front of the sensor.

A focus detection algorithm can be based on analysing pixel data to either give an indication of whether the focus is getting better or worse, or to provide a value which is the measure of the absolute focus.

By arranging a detector device and suitable lens in front of the computer's monitor, the system could then detect if an object was present a certain distance from the screen. The sensor and lens arrangement would usually be set up to observe the user's head or torso.

This technique eliminates false detections caused by movement at a further distance, e.g. someone walking past the desk that the computer is on. The system could be set either for detecting objects at a predefined distance from the screen or alternatively it could learn or memorize the distance that the user typically operates at.

Hence, if the user was present, the computer would remain active and/or logged on to a network. However if the user was to move away from the computer for a certain period of time, the display's backlight would turn off, eventually shutting down the PC or going into hibernation/low power mode. Where security concerns are great, the system could automatically log off.

When the user returned, the system could turn-on the display's lighting, turn on the display or possibly even come out of low-power mode automatically.

Any of the pixel arrays of the above detector devices can be used to provide the outputs for a focus detection algorithm.

A further type of algorithm that can be used is a colour detection algorithm. While the focus algorithm is robust and can reliably detect the absence of a user, it may get confused by an object, e.g. the back of an office chair, which is within the system's field of view.

A method to overcome this is to detect the colour of the object. Human skin tone (or flesh tone) is narrowly defined, even for people from different ethnic origins. A sensor which has colour sensitive pixels is therefore able to detect the colour of objects and detect if there are enough pixels of "skin tone" in front of the sensor to indicate the presence or absence of a user.

Colour balancing techniques may be employed to compensate for variations in scene illumination, thus further improving accuracy. These techniques are in themselves well known and will not be described in further detail.

Any of the pixel arrays of the above detector devices can be used to provide the outputs for a focus detection algorithm.

The outputs of any of the pixel arrays described above can also be used as the inputs for processing by further algorithms that can combine any two or all three of motion, focus and colour algorithms.

For example, a detector using only the colour algorithm may well be fooled by the presence of suitably coloured walls or other surfaces. It could therefore be combined with the focus algorithm to ensure that an event is only triggered when human skin tones are present at a particular distance from the screen.

In the embodiments illustrated in Figs. 6 and 7, where a two dimensional array is used, more advanced implementations of the motion, focus and colour algorithms are possible.

If a motion detection algorithm is used, it is possible to program the detector device 50,70 to ignore certain regions of the image, for example the background, where it is more likely that irrelevant motion is generated.

The focus detection and colour space algorithms do not require temporal comparisons and hence the need for a frame-store is eliminated. This reduces the complexity of the device (increasing yield and reducing cost) and also reduces the area of the device (reducing cost) - depending on the technology used and the size of the imaging array, the frame store 56 can easily account for 10%-30% of the size of the device.

The two dimensional sensor shown in Figs. 6 and 7 may also able to perform more spatially sensitive algorithms, for example a facial recognition algorithm that could, among other tasks check for the presence (or absence) of eyes in the image; check that there is a "round" head in focus; or check the height of the head.

Such a two dimensional system may be more reliable, but more expensive than a one dimensional (linear) system.

It may also be possible to include a biometric based face recognition which may be reliable enough to automatically log-on the user.

For all the above embodiments, a further power saving could be achieved with selective use of the appropriate algorithms.

For example, if a detector system uses more than one type of algorithm, a first type of algorithm can be used at all times, and, when the first algorithm indicates that an event has occurred, the remaining algorithm(s) could be employed to confirm the event before the display is powered up or down. As the remaining algorithm(s) are not enabled for the majority of the time, their power consumption is negligible.

Furthermore, for each algorithm, the threshold used to detect the presence of a user could be different from the threshold used to detect the absence of a user.

For example, while a user was present, the algorithm(s) would be used to ensure a high accuracy in user detection, but while the user was not present, the system could use the lowest resolution (and therefore the lowest accuracy and possibly lower power consumption) to see if there was possibly a user present.

This ensures that while the user is present and using the computer, the annoyance and inconvenience of unnecessary display power downs is minimised. However, while the user is not present, no inconvenience is caused if the screen accidentally flashes on for a while, and so the accuracy of user detection is not as critical as the case when a user is present.

It will be appreciated that various modifications and improvements may be incorporated to the above without departing from the scope of the invention. In particular, the detector device which is herein described as being part of a computer user detection apparatus may be equally useful for operation with to other devices or in other situations, for example as a general surveillance tool or monitoring device. The principles of the invention can also be used or varied to detect any desired object, rather than just being limited to the detection of a person. Similarly, the described algorithms may also be applied to other detector devices, for example surveillance equipment or a general monitoring device.

Furthermore, the principles of the invention can be applied to other detectors, such as one used to detect the movement of a hand at a predetermined distance and so function as a switch with no moving parts, operable by waving of a hand. In addition, making use of focus detection algorithms could result in a switch that has different response depending on other factors, for example the proximity of a hand to the switch. The embodiments of the invention may also be used as a tool for counting and measuring the speed of passing objects.

Also, it will be understood that while the "linear arrays" illustrated and described above are horizontal arrays, the invention may equally well be applied to linear arrays which are vertical. The practical issues involved in modifying the embodiments described above to vertical linear arrays from horizontal linear arrays are straightforward to one skilled in the art.

**Claims**

1. A computer user detection apparatus comprising one or more spaced apart linear arrays (12,52) of light sensing elements (14,60); circuit means (16,18,56) arranged to obtain an output representative of light incident on the or each spaced apart linear array (12,52); and signal processing means (22,54) arranged to ascertain a new presence or absence of a computer user based on the output from the or each spaced apart linear array, wherein the signal processing means (22,54)is hard or soft coded with a detection algorithm, wherein the detection algorithm comprises one sub-algorithm being a focus detection algorithm, **characterized in that** said focus detection algorithm is used to detect a new presence of a computer user at a predetermined distance from a computer display or absence of a computer user at a predetermined distance from a computer display.

2. The computer user detection apparatus of claim 1, further comprising an output interface (20) operable to send command signals to a computer to selectively adjust the mode of operation of the computer's screen and/or to log out a user from the computer based on the assertion of a new absence or presence of a user.

3. The computer user detection apparatus of claim 1 or claim 2, comprising two spaced apart linear arrays (12,52) of light sensing elements (14,60) or two pairs of spaced apart linear arrays (12,52) of light sensing elements (14,60) arranged at opposing portions of a substrate on which the apparatus is embodied.

4. The computer user detection apparatus of any preceding claim, wherein the or each spaced apart linear array (12,52) of light sensing elements (14,60) is a subset of a two dimensional array (60) of light sensing elements (60).

5. The computer user detection apparatus of claim 4, wherein the two dimensional array (60) of light sensing elements (60) has a width of less than one hundred and twenty light sensing elements (60) and a length of less than one hundred and sixty light sensing elements (60).

6. The computer user detection apparatus of any preceding claims, wherein the detection algorithm comprises one or more sub-algorithms selected from the group comprising a motion detection algorithm and a colour detection algorithm.

7. The computer user detection apparatus of any of preceding claims, wherein the mode of operation of the computer's screen is adjustable to a first mode when a user is detected and a second mode when a user is not detected, the power consumption of the display being less in the second mode than in the first mode.

8. The computer user detection apparatus of any preceding claims, wherein the output interface (20) sends a command signal to the computer via.any one of the following communication interfaces: USB, I<2> C, SPI, interrupt output, any suitable wireless interface..

9. A computer comprising a computer user detection apparatus according to any of claims 1 to 8.

10. A method of detecting the presence or absence of a computer user comprising the steps of providing one or more spaced apart linear arrays (12,52) of light sensing elements (14,60); obtaining an output representative of light incident on the or each spaced apart linear array (12,52); and processing the output to ascertain a new presence or new absence of a computer user based on the output from the or each spaced apart linear array, wherein the step of processing the output to ascertain a new presence or new absence of a computer user based on the output from the or each spaced apart linear array comprises performing a detection algorithm, wherein the detection algorithm comprises one sub-algorithm being a focus detection algorithm **characterized in that** said focus detection algorithm is used to detect a new presence of a computer user at a predetermined distance from a computer display or absence of a computer user at a predetermined distance from a computer display.

11. The method of claim 10, further comprising the steps of providing an output interface; and sending command signals from the output interface to a computer to selectively adjust the mode of operation of the computer's screen and/or to log out a user from the computer based on the assertion of a new absence or presence of a user.

12. The method of claim 10 or claim 11, wherein the detection algorithm comprises one or more sub-algorithms selected from the group comprising a motion detection algorithm and a colour detection algorithm.

13. The method of any of claims 10 to 12, wherein the motion detection algorithm comprises the steps of determining frame by frame changes in intensity of outputs from the or each spaced apart linear array (12,52) of light sensing elements (14,60), comparing said changes with a predetermined threshold, and, if said changes exceed the predetermined threshold, asserting the new presence or new absence of a computer user.

14. The method of claim 13, wherein, prior to the step of asserting the new presence or new absence of a computer user, the steps of measuring a reference intensity and performing a frame by frame normalisation based on the reference intensity are performed.

15. The method of any of claims 10 to 14, wherein the focus detection algorithm comprises a training component that learns the typical distance of the computer user from the computer display.

16. The method of any of claims 10 to 15, wherein the colour detection algorithm comprises a colour balancing component to compensate for variations in scene illumination.

17. The method of any of claims 10 to 16, wherein the colour detection algorithm comprises a training component that learns the typical skin tone of the computer user.

18. The method of any of claims 10 to 17, wherein the colour detection algorithm and the focus detection algorithm operate to verify the presence of a computer user having predetermined.skin tone properties, and being at a predetermined distance from a computer display.

19. The method of claim 18, wherein a motion detection algorithm also operates, and all three motion, focus and colour detection algorithms are operated before asserting the new presence or absence of a computer user.

20. The method of any of claims 12 to 19, wherein the predetermined motion threshold and/or one or more of a predetermined focus threshold and a predetermined colour threshold used for detection of a new presence of a computer user is different from the predetermined threshold used for detection of a new absence of a computer user.

21. The method of any of claims 10 to 20, further comprising the steps of using a first algorithm for detection of a new computer user presence or a new computer user absence, and, when the first algorithm indicates a new presence or absence, using one or more further algorithms to verify the new presence or absence.

22. The method of any of claims 10 to 21, wherein the or each spaced apart linear array of light sensitive elements are subsets of a two dimensional array (60) of light sensitive elements (60).

23. The method of claim 22 when dependent from any of claims 12 to 21 wherein the motion detection algorithm ignores motion in a specified region of space

24. The method of any of claims 10 to 23, wherein the step of obtaining an output from the or each spaced apart linear array (12,52) is carried out at a frame rate equal to or less than five frames per second.

**Patentansprüche**

1. Eine Vorrichtung zur Erkennung eines Computerbenutzers, die eine oder mehrere mit Abstand angeordnete lineare Anordnungen (12, 52) von Lichtfühlerelementen (14, 60); Schaltungsmittel (16, 18, 56), die angeordnet sind, um eine Ausgabe, die repräsentativ für das auf die oder jede mit Abstand angeordnete lineare Anordnung (12, 52) einfallende Licht ist, zu erhalten, und Signalverarbeitungsmittel (22, 54), die angeordnet sind, um eine neue Anwesenheit oder Abwesenheit eines Computerbenutzers auf der Basis der Ausgabe von der oder jeder mit Abstand angeordneten linearen Anordnung zu bestimmen, beinhaltet, wobei die Signalverarbeitungsmittel (22, 54) fest oder weich mit einem Erkennungsalgorithmus programmiert sind, wobei der Erkennungsalgorithmus einen Subalgorithmus, der ein Fokuserkennungsalgorithmus ist, beinhaltet, **dadurch gekennzeichnet, dass** der Fokuserkennungsalgorithmus verwendet wird, um eine neue Anwesenheit eines Computerbenutzers an einem vorbestimmten Abstand von einem Computerbildschirm oder eine Abwesenheit eines Computerbenutzers an einem vorbestimmten Abstand von einem Computerbildschirm zu erkennen.

**2.** Vorrichtung zur Erkennung eines Computerbenutzers gemäß Anspruch 1, die ferner eine Ausgabeschnittstelle (20) beinhaltet, die betriebsfähig ist, um Befehlssignale an einen Computer zu senden, um die Betriebsweise des Bildschirms des Computers selektiv einzustellen und/oder einen Benutzer auf Basis der Feststellung einer neuen Abwesenheit oder Anwesenheit eines Benutzers abzumelden.

**3.** Vorrichtung zur Erkennung eines Computerbenutzers gemäß Anspruch 1 oder Anspruch 2, die zwei mit Abstand angeordnete lineare Anordnungen (11, 52) von Lichtfühlerelementen (14, 60) oder zwei Paare mit Abstand angeordnete lineare Anordnungen (12, 52) von Lichtfühlerelementen (14, 60), die an gegenüberliegenden Abschnitten eines Substrats, auf dem die Vorrichtung verkörpert ist, angeordnet sind, beinhaltet.

**4.** Vorrichtung zur Erkennung eines Computerbenutzers gemäß einem der vorhergehenden Ansprüche, wobei die oder jede mit Abstand angeordnete lineare Anordnung (12, 52) von Lichtfühlerelementen (14, 60) eine Teilmenge einer zweidimensionalen Anordnung (60) von Lichtfühlerelementen (60) ist.

**5.** Vorrichtung zur Erkennung eines Computerbenutzers gemäß Anspruch 4, wobei die zweidimensionale Anordnung (60) von Lichtfühlerelementen (60) eine Breite von weniger als einhundertundzwanzig Lichtfühlerelementen (60) und eine Länge von weniger als einhundertundsechzig Lichtfühlerelementen (60) aufweist.

**6.** Vorrichtung zur Erkennung eines Computerbenutzers gemäß einem der vorhergehenden Ansprüche, wobei der Erkennungsalgorithmus einen oder mehrere Subalgorithmen, ausgewählt aus der Gruppe, die einen Bewegungserkennungsalgorithmus und einen Farberkennungsalgorithmus beinhaltet, beinhaltet.

**7.** Vorrichtung zur Erkennung eines Computerbenutzers gemäß einem der vorhergehenden Ansprüche, wobei die Betriebsweise des Bildschirms des Computers auf einen ersten Modus, wenn ein Benutzer erkannt wird, und einen zweiten Modus, wenn ein Benutzer nicht erkannt wird, einstellbar ist, wobei der Leistungsverbrauch des Bildschirms in dem zweiten Modus geringer ist als in dem ersten Modus.

**8.** Vorrichtung zur Erkennung eines Computerbenutzers gemäß einem der vorhergehenden Ansprüche, wobei die Ausgabeschnittstelle (20) über eine der folgenden Kommunikationsschnittstellen ein Befehlssignal an den Computer sendet: USB, I2C, SPI, Interrupt-Output, jede geeignete drahtlose Schnittstelle.

**9.** Ein Computer, der eine Vorrichtung zur Erkennung eines Computerbenutzers gemäß einem der Ansprüche 1 bis 8 beinhaltet.

**10.** Ein Verfahren zum Erkennen der Anwesenheit oder Abwesenheit eines Computerbenutzers, das die folgenden Schritte beinhaltet: Bereitstellen von einer oder mehreren mit Abstand angeordneten linearen Anordnungen (12, 52) von Lichtfühlerelementen (14, 60); Erhalten einer Ausgabe, die repräsentativ für das auf die oder jede mit Abstand angeordnete lineare Anordnung (12, 52) einfallende Licht ist, und Verarbeiten der Ausgabe, um eine neue Anwesenheit oder neue Abwesenheit eines Computerbenutzers auf der Basis der Ausgabe von der oder jeder mit Abstand angeordneten linearen Anordnung zu bestimmen, wobei der Schritt der Verarbeitung der Ausgabe, um eine neue Anwesenheit oder eine neue Abwesenheit eines Computerbenutzers auf der Basis der Ausgabe von der oder jeder mit Abstand angeordneten linearen Anordnung zu bestimmen, das Durchführen eines Erkennungsalgorithmus beinhaltet, wobei der Erkennungsalgorithmus einen Subalgorithmus beinhaltet, der ein Fokuserkennungsalgorithmus ist, **dadurch gekennzeichnet, dass** der Fokuserkennungsalgorithmus verwendet wird, um eine neue Anwesenheit eines Computerbenutzers an einem vorbestimmten Abstand von einem Computerbildschirm oder eine Abwesenheit eines Computerbenutzers an einem vorbestimmten Abstand von einem Computerbildschirm zu erkennen.

**11.** Verfahren gemäß Anspruch 10, das ferner die folgenden Schritte beinhaltet: Bereitstellen einer Ausgabeschnittstelle, und Senden von Befehlssignalen aus der Ausgabeschnittstelle an einen Computer, um die Betriebsweise des Bildschirms des Computers selektiv einzustellen und/oder einen Benutzer auf Basis der Feststellung einer neuen Abwesenheit oder Anwesenheit eines Benutzers abzumelden.

**12.** Verfahren gemäß Anspruch 10 oder Anspruch 11, wobei der Erkennungsalgorithmus einen oder mehrere Subalgorithmen, ausgewählt aus der Gruppe, die einen Bewegungserkennungsalgorithmus und einen Farberkennungsalgorithmus beinhaltet, beinhaltet.

**13.** Verfahren gemäß einem der Ansprüche 10 bis 12, wobei der Bewegungserkennungsalgorithmus die folgenden Schritte beinhaltet: Bestimmen von Änderungen Einzelbild für Einzelbild in der Intensität der Ausgaben von der oder jeder mit Abstand angeordneten linearen Anordnung (12, 52) von Lichtfühlerelementen (14, 60), Vergleichen der Änderungen mit einem vorbestimmten Schwellenwert, und, falls diese Änderungen den vorbestimmten Schwellenwert übersteigen, Feststellen der neuen Anwesenheit oder neuen Abwesenheit eines Computerbenutzers.

**14.** Verfahren gemäß Anspruch 13, wobei vor dem Schritt der Feststellung der neuen Anwesenheit oder neuen Abwesenheit eines Computerbenutzers die Schritte der Messung einer Referenzintensität und der Durchführung einer Normalisierung Einzelbild für Einzelbild auf der Basis der Referenzintensität durchgeführt werden.

**15.** Verfahren gemäß einem der Ansprüche 10 bis 14, wobei der Fokuserkennungsalgorithmus eine Trainingskomponente beinhaltet, die den typischen Abstand des Computerbenutzers von dem Computerbildschirm lernt.

**16.** Verfahren gemäß einem der Ansprüche 10 bis 15, wobei der Farberkennungsalgorithmus eine Farbabgleichkomponente beinhaltet, um Variationen in der Szenenbeleuchtung auszugleichen.

**17.** Verfahren gemäß einem der Ansprüche 10 bis 16, wobei der Farberkennungsalgorithmus eine Trainingskomponente beinhaltet, die den typischen Hautton des Computerbenutzers lernt.

**18.** Verfahren gemäß einem der Ansprüche 10 bis 17, wobei der Farberkennungsalgorithmus und der Fokuserkennungsalgorithmus arbeiten, um die Anwesenheit eines Computerbenutzers, der vorbestimmte Hauttoneigenschaften aufweist und sich an einem vorbestimmten Abstand von einem Computerbildschirm befindet, zu verifizieren.

**19.** Verfahren gemäß Anspruch 18, wobei ein Bewegungserkennungsalgorithmus ebenfalls betrieben wird und alle drei Bewegungs-, Fokus- und Farberkennungsalgorithmen betrieben werden, bevor die neue Anwesenheit oder Abwesenheit eines Computerbenutzers festgestellt wird.

**20.** Verfahren gemäß einem der Ansprüche 12 bis 19, wobei sich der vorbestimmte Bewegungsschwellenwert und/oder ein oder mehrere eines vorbestimmten Fokusschwellenwerts und eines vorbestimmten Farbschwellenwerts, die zur Erkennung einer neuen Anwesenheit eines Computerbenutzers verwendet werden, von dem vorbestimmten Schwellenwert, der für die Erkennung einer neuen Abwesenheit eines Computerbenutzers verwendet wird, unterscheiden.

**21.** Verfahren gemäß einem der Ansprüche 10 bis 20, das ferner die Schritte des Verwendens eines ersten Algorithmus zur Erkennung einer neuen Computerbenutzeranwesenheit oder einer neuen Computerbenutzerabwesenheit beinhaltet, und, wenn der erste Algorithmus eine neue Anwesenheit oder Abwesenheit indiziert, das Verwenden von einem oder mehreren Algorithmen, um die neue Anwesenheit oder Abwesenheit zu verifizieren.

**22.** Verfahren gemäß einem der Ansprüche 10 bis 21, wobei die oder jede mit Abstand angeordnete lineare Anordnung von lichtempfindlichen Elementen Teilmengen einer zweidimensionalen Anordnung (60) von lichtempfindlichen Elementen (60) sind.

**23.** Verfahren gemäß Anspruch 22, wenn abhängig von einem der Ansprüche 12 bis 21, wobei der Bewegungserkennungsalgorithmus Bewegung in einem spezifizierten Bereich des Raums ignoriert.

**24.** Verfahren gemäß einem der Ansprüche 10 bis 23, wobei der Schritt des Erhaltens einer Ausgabe von der oder jeder mit Abstand angeordneten linearen Anordnung (12, 52) bei einer Einzelbildrate ausgeführt wird, die gleich oder geringer als fünf Einzelbilder pro Sekunde ist.

**Revendications**

**1.** Un appareil de détection d'utilisateur d'ordinateur comprenant une ou plusieurs matrices linéaires espacées (12, 52) d'éléments photosensibles (14, 60) ; des moyens formant circuits (16, 18, 56) agencés de façon à obtenir une sortie représentative de lumière incidente sur la ou sur chaque matrice linéaire espacée (12, 52) ; et un moyen de traitement de signal (22, 54) agencé pour s'assurer d'une nouvelle présence ou absence d'un utilisateur d'ordinateur sur la base de la sortie provenant de la ou de chaque matrice linéaire espacée, dans lequel le moyen de traitement de signal (22, 54) est codé de façon fixe ou de façon flexible avec un algorithme de détection, où l'algorithme de détection comprend un sous-algorithme, lequel est un algorithme de détection de foyer, **caractérisé en ce que** ledit algorithme de détection de foyer est utilisé pour détecter une nouvelle présence d'un utilisateur d'ordinateur à une distance prédéterminée d'un afficheur d'ordinateur ou absence d'un utilisateur d'ordinateur à une distance prédéterminée d'un afficheur d'ordinateur.

2. L'appareil de détection d'utilisateur d'ordinateur de la revendication 1, comprenant de plus une interface de sortie (20) pouvant fonctionner pour envoyer des signaux de commande à un ordinateur afin de régler de façon sélective le mode de fonctionnement de l'écran de l'ordinateur et ou de déconnecter un utilisateur de l'ordinateur sur la base de l'assertion d'une nouvelle absence ou présence d'un utilisateur.

3. L'appareil de détection d'utilisateur d'ordinateur de la revendication 1 ou de la revendication 2, comprenant deux matrices linéaires espacées (12, 52) d'éléments photosensibles (14, 60) ou deux paires de matrices linéaires espacées (12, 52) d'éléments photosensibles (14, 60) agencées au niveau de portions se faisant face d'un substrat sur lequel l'appareil est incorporé.

4. L'appareil de détection d'utilisateur d'ordinateur de n'importe quelle revendication précédente, dans lequel la ou chaque matrice linéaire espacée (12, 52) d'éléments photosensibles (14, 60) est un sous-ensemble d'une matrice bidimensionnelle (60) d'éléments photosensibles (60).

5. L'appareil de détection d'utilisateur d'ordinateur de la revendication 4, dans lequel la matrice bidimensionnelle (60) d'éléments photosensibles (60) a une largeur inférieure à cent vingt éléments photosensibles (60) et une longueur inférieure à cent soixante éléments photosensibles (60).

6. L'appareil de détection d'utilisateur d'ordinateur de n'importe quelles revendications précédentes, dans lequel l'algorithme de détection comprend un ou plusieurs sous-algorithmes sélectionnés dans le groupe comprenant un algorithme de détection de mouvement et un algorithme de détection de couleur.

7. L'appareil de détection d'utilisateur d'ordinateur de n'importe lesquelles des revendications précédentes, dans lequel le mode de fonctionnement de l'écran de l'ordinateur peut être réglé sur un premier mode lorsqu'un utilisateur est détecté et sur un deuxième mode lorsqu'un utilisateur n'est pas détecté, la consommation d'énergie de l'afficheur étant moindre dans le deuxième mode que dans le premier mode.

8. L'appareil de détection d'utilisateur d'ordinateur de n'importe quelles revendications précédentes, dans lequel l'interface de sortie (20) envoie un signal de commande à l'ordinateur par le biais d'une quelconque des interfaces de communication suivantes : USB, I<2>C, SPI, interruption sortie, n'importe quelle interface sans fil appropriée.

9. Un ordinateur comprenant un appareil de détection d'utilisateur d'ordinateur selon n'importe lesquelles des revendications 1 à 8.

10. Une méthode pour détecter la présence ou l'absence d'un utilisateur d'ordinateur comprenant les étapes consistant à fournir une ou plusieurs matrices linéaires espacées (12, 52) d'éléments photosensibles (14, 60) ; obtenir une sortie représentative de lumière incidente sur la ou sur chaque matrice linéaire espacée (12, 52) ; et traiter la sortie pour s'assurer d'une nouvelle présence ou nouvelle absence d'un utilisateur d'ordinateur sur la base de la sortie provenant de la ou de chaque matrice linéaire espacée, dans laquelle l'étape consistant à traiter la sortie pour s'assurer d'une nouvelle présence ou nouvelle absence d'un utilisateur d'ordinateur sur la base de la sortie provenant de la ou de chaque matrice linéaire espacée comprend réaliser un algorithme de détection, où l'algorithme de détection comprend un sous-algorithme qui est un algorithme de détection de foyer, **caractérisée en ce que** ledit algorithme de détection de foyer est utilisé pour détecter une nouvelle présence d'un utilisateur d'ordinateur à une distance prédéterminée d'un afficheur d'ordinateur ou absence d'un utilisateur d'ordinateur à une distance prédéterminée d'un afficheur d'ordinateur.

11. La méthode de la revendication 10, comprenant de plus les étapes consistant à fournir une interface de sortie ; et envoyer des signaux de commande de l'interface de sortie à un ordinateur afin de régler de façon sélective le mode de fonctionnement de l'écran de l'ordinateur et / ou de déconnecter un utilisateur de l'ordinateur sur la base de l'assertion d'une nouvelle absence ou présence d'un utilisateur.

**12.** La méthode de la revendication 10 ou de la revendication 11, dans laquelle l'algorithme de détection comprend un ou plusieurs sous-algorithmes sélectionnés dans le groupe comprenant un algorithme de détection de mouvement et un algorithme de détection de couleur.

**13.** La méthode de n'importe lesquelles des revendications 10 à 12, dans laquelle l'algorithme de détection de mouvement comprend les étapes consistant à déterminer trame par trame des changements dans l'intensité de sorties provenant de la

ou de chaque matrice linéaire espacée (12, 52) d'éléments photosensibles (14, 60), comparer lesdits changements avec un seuil prédéterminé, et si lesdits changements dépassent le seuil prédéterminé, s'assurer de la nouvelle présence ou de la nouvelle absence d'un utilisateur d'ordinateur.

**14.** La méthode de la revendication 13, dans laquelle, avant l'étape consistant à s'assurer de la nouvelle présence ou la nouvelle absence d'un utilisateur d'ordinateur, les étapes consistant à mesurer une intensité de référence et réaliser une normalisation trame par trame sur la base de l'intensité de référence sont réalisées.

**15.** La méthode de n'importe lesquelles des revendications 10 à 14, dans laquelle l'algorithme de détection de foyer comprend une composante de formation qui apprend la distance typique de l'utilisateur d'ordinateur de l'afficheur d'ordinateur.

**16.** La méthode de n'importe lesquelles des revendications 10 à 15, dans laquelle l'algorithme de détection de couleur comprend une composante d'équilibrage de couleur pour compenser des variations dans l'éclairement lumineux de scène.

**17.** La méthode de n'importe lesquelles des revendications 10 à 16, dans laquelle l'algorithme de détection de couleur comprend une composante de formation qui apprend la coloration de peau typique de l'utilisateur d'ordinateur.

**18.** La méthode de n'importe lesquelles des revendications 10 à 17; dans laquelle l'algorithme de détection de couleur et l'algorithme de détection de foyer fonctionnent pour vérifier la présence d'un utilisateur d'ordinateur ayant des propriétés de coloration de peau prédéterminées et se trouvant à une distance prédéterminée d'un afficheur d'ordinateur.

**19.** La méthode de la revendication 18, dans laquelle un algorithme de détection de mouvement fonctionne également, et les algorithmes de mouvement, foyer et détection de couleur sont tous trois mis en opération avant de s'assurer de la nouvelle présence ou absence d'un utilisateur d'ordinateur.

**20.** La méthode de n'importe lesquelles des revendications 12 à 19, dans laquelle le seuil de mouvement prédéterminé et / ou un

ou plusieurs seuils parmi un seuil de foyer prédéterminé et un seuil de couleur prédéterminé utilisés pour la détection d'une nouvelle présence d'un utilisateur d'ordinateur sont différents du seuil prédéterminé utilisé pour la détection d'une nouvelle absence d'un utilisateur d'ordinateur.

**21.** La méthode de n'importe lesquelles des revendications 10 à 20, comprenant de plus les étapes consistant à utiliser un premier algorithme pour la détection d'une nouvelle présence d'utilisateur d'ordinateur ou d'une nouvelle absence d'utilisateur d'ordinateur, et, lorsque le premier algorithme indique une nouvelle présence ou absence, utiliser un ou plusieurs algorithmes supplémentaires pour vérifier la nouvelle présence ou absence.

**22.** La méthode de n'importe lesquelles des revendications 10 à 21, dans laquelle la ou chaque matrice linéaire espacée d'éléments photosensibles sont des sous-ensembles d'une matrice bidimensionnelle (60) d'éléments photosensibles (60).

**23.** La méthode de la revendication 22 lorsqu'elle dépend de n'importe lesquelles des revendications 12 à 21 dans laquelle l'algorithme de détection de mouvement ne tient pas compte du mouvement dans une zone d'espace spécifiée.

**24.** La méthode de n'importe lesquelles des revendications 10 à 23, dans laquelle l'étape consistant à obtenir une sortie de la ou de chaque matrice linéaire espacée (12, 52) est effectuée à un taux de trame égal ou inférieur à cinq trames par seconde.

10

14

12 20-200 pixels

ADC, Iref, Vref

16

18 Timing I/O interface

20

22 Detection Logic

**Fig. 1**

26

14

12 20-200 pixels

20-200 pixels

ADC, Iref, Vref

16

18 Timing I/O interface

20

22 Detection Logic

**Fig. 2**

**Fig. 3**

**Fig. 4**

Fig. 5

Fig. 6

ADC, Iref, Vref

Detection Logic

I2C

120

160

70

16

52

60

58

54

*Fig. 7*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002095222 A1
- US 5635905 A
- US 6421453 B1
- US 6111517 A
- US 5835083 A
- US 5991429 A
- US 5151583 A
- US 5404163 A
- US 6753919 B